# EUROPÄISCHE PATENTSCHRIFT

(11) **EP 3 302 899 B1**
(45) Veröffentlichungstag und Bekanntmachung des Hinweises auf die Patenterteilung: **16.10.2024**
(21) Anmeldenummer: 16728230.0
(22) Anmeldetag: 19.05.2016
(51) Int. Cl.: B25J 15/00, B23P 19/02, B62D 25/24, B25J 17/02

(54) **STOPFENFÜGEWERKZEUG UND FÜGEVERFAHREN**
PLUG JOINING TOOL AND JOINING METHOD
OUTIL D'ASSEMBLAGE DE BOUCHONS ET PROCÉDÉ D'ASSEMBLAGE

(30) Priorität: 01.06.2015 DE 202015102825 U
(43) Veröffentlichungstag der Anmeldung: 11.04.2018
(73) Patentinhaber: KUKA Systems GmbH, 86165 Augsburg (DE)
(72) Erfinder: MAYR, Stefan, 86316 Friedberg (DE)
(74) Vertreter: Ernicke, Moritz
(86) Internationale Anmeldenummer: PCT/EP2016/061248
(87) Internationale Veröffentlichungsnummer: WO 2016/193012

(56) Entgegenhaltungen:
- DE-A1- 102010 005 798
- DE-A5- 112005 002 826
- JP-A- H04 227 505
- US-A1- 2011 209 320
- FRANK KLINGEMANN: "Pressekonferenz AUTOMATICA", 3 June 2014 (2014-06-03), XP055293205, Retrieved from the Internet <URL:https://www.kuka.com/-/media/kuka-corporate/documents/ir/reports-and-presentations/trade-fairs/prsentation_messen_automatika_2014.pdf?la=de-de> [retrieved on 20160803]

## Beschreibung

Die Erfindung betrifft ein Stopfenfügewerkzeug, eine Stopfenfügeeinrichtung und ein Verfahren mit den Merkmalen im Oberbegriff der selbstständigen Ansprüche.

Eine Einrichtung zum automatischen Fügen von Stopfen an Karosserieteilen ist aus der DE 10 2010 005 798 A1 bekannt. Die Stopfenfügeeinrichtung umfasst einen mehrachsigen Industrieroboter mit einem Stopfenfügewerkzeug, das mit einem Stopfenmagazin und einer Setzeinheit mit einer drehbaren Stopfenaufnahme ausgestattet ist. Die Stopfenaufnahme kann zwischen einer Ladestellung zur Aufnahme eine Stopfens und einer Fügestellung zum Fügen des Stopfens an einer Karosserieöffnung geschwenkt werden.

Die JP H04 227505 A befasst sich mit einer Vorrichtung zum Auf- und Abschrauben eines Dosendeckels an einem Stutzen und weist ein robotergeführtes Schraubwerkzeug mit einem drehend angetriebenen Deckelgreifer an einem Federschlitten auf.

Es ist Aufgabe der vorliegenden Erfindung, eine verbesserte Stopfenfügetechnik aufzuzeigen.

Die Erfindung löst diese Aufgabe mit den Merkmalen in den selbstständigen Ansprüchen.

Die beanspruchte Stopfenfügetechnik, d.h. das Stopfenfügewerkzeug und das Fügeverfahren, haben verschiedene Vorteile. Dank der Ausgleichseinrichtung kann das Stopfenfügewerkzeug mit beliebigen Arten von Robotern, insbesondere positionsgesteuerten Robotern betrieben werden. Etwaige Toleranzen oder Programmierungenauigkeiten können mit hoher Sicherheit kompensiert werden. Hierdurch lassen sich beim automatischen Fügen der Stopfen Prozessmenge und Schäden vermeiden. Außerdem wird die Sicherheit und Qualität des Fügeprozesses verbessert. Der Fügeprozess kann über den Weg, insbesondere Fügeweg, gesteuert werden.

Das Stopfenfügewerkzeug weist ein Gestell mit einem Anschluss für einen Industrieroboter, ein Stopfenmagazin und eine Setzeinheit mit einer Stopfenaufnahme und einem Setzstößel auf. Die Stopfenaufnahme weist einen oder mehrere Aufnahmeköpfe mit jeweils einem Setzstößel und einem Stopfenköcher zur Aufnahme eines einzelnen Stopfens auf, wobei der Stopfenköcher relativ zum Setzstößel axial ausweichfähig gelagert ist und wobei der jeweilige Stopfenköcher auf seinem Setzstößel axial verschieblich gelagert und von einem Rückstellelement beaufschlagt ist.

Die Ausgleichseinrichtung kann insbesondere etwaige Abweichungen des Ist-Fügewegs vom vorgegebenen, insbesondere programmierten Soll-Fügeweg kompensieren. Solche Abweichungen können zum Beispiel durch eine ungenaue Positionierung des Stopfenfügewerkzeugs relativ zur Fügestelle am Werkstück entstehen. Eine andere Ursache kann in Toleranzen am Werkstück, der Fügestelle, dem Stopfen etc. bestehen.

Günstig ist auch eine Funktion der Ausgleichseinrichtung, die eine Ausweichbewegung des Setzstößels beim Fügen ermöglicht. Hierdurch können Reaktionskräfte aufgenommen und die Gefahr einer Beschädigung des Werkzeugs und/oder des Werkstücks bzw. auch des Industrieroboters vermieden oder zumindest wesentlich gemindert werden.

Die beanspruchte Stopfenfügetechnik und die Ausgleichseinrichtung lassen sich mit besonderem Vorteil bei einem fügetechnisch passiven Stopfenfügewerkzeug einsetzen, bei dem die Vorschub- oder Fügebewegung und die Fügekraft vom Industrieroboter aufgebracht werden. Vorteile können aber auch bei einem Einsatz bei einem anderen und fügetechnisch aktiven Stopfenfügewerkzeug erzielt werden, bei dem die Fügebewegung und die Fügekraft von einem werkzeugeigenen Antriebsmittel aufgebracht werden, z.B. einem mit dem Setzstößel verbundenen Zylinder wie beim Eingangs genannten Stand der Technik.

Die Ausgleichseinrichtung lässt vorzugsweise den Setzstößel gegen seine Fügerichtung zurückweichen. Eine Ausweichbewegung findet außerdem erst nach Überschreiten einer vorgegebenen Reaktionskraft-Schwelle statt, so dass der Fügeprozess nicht negativ beeinflusst wird. Die Ausgleichseinrichtung kann hierfür einen entlang der bevorzugt linearen Ausgleichsachse wirkenden Gegenhalter aufweisen.

Der Gegenhalter kann eine vorzugsweise einstellbare Gegenkraft oder Vorspannung aufweisen und gibt erst nach deren Überschreiten die Ausweichbewegung frei. Die Reaktionskraft-Schwelle und eventuell auch eine damit verbundene Kraftmessung kann über die Ausgleichseinrichtung, insbesondere den Gegenhalter, erfolgen.

In konstruktiver und funktionaler Hinsicht ist eine Ausbildung der Ausgleichseinrichtung als Schlittenanordnung mit einer Führung und einem Gegenhalter, z.B. in Form eines Zylinders, günstig. Der Bauaufwand und der Platzbedarf können klein gehalten werden. Ein als Zylinder oder in anderer Weise federnd ausgebildeter Gegenhalter kann außerdem im Ausweichfall von selbst wieder in die Ausgangsstellung zurückkehren.

In einer besonders vorteilhaften Ausführungsform hat das Stopfenfügewerkzeug eine Erfassungseinrichtung. Diese kann eine oder mehrere Komponenten, insbesondere Sensoren, beinhalten, die ggf. verteilt am Stopfenfügewerkzeug angeordnet sind.

Die Erfassungseinrichtung kann unterschiedlichen Zwecken dienen. Sie kann einerseits für die Detektion der Fügestelle herangezogen werden und hierfür eine geeignete Sensorik, insbesondere einen optischen Sensor, aufweisen. Diese ist bevorzugt am vorderen Werkzeugbereich und an der Fügestellung der Stopfenaufnahme angeordnet. Alternativ oder zusätzlich kann mit der Erfassungseinrichtung über eine entsprechend geeignete Sensorik eine Prozessreaktion oder ein Prozessparameter detektiert werden. Dies betrifft z.B. die Erfassung der Reaktionskraft. Hierfür eignet sich besonders ein Sensor am Gegenhalter der Ausgleichseinrichtung. Andererseits kann die Ausweichbewegung eines Stopfenköchers gegenüber dem Setzstößel detektiert werden. Hieraus kann eine Information über den Vorschubweg des Stopfens, den so genannten Setzweg, an der Fügestelle erhalten werden. Die verschiedenen Detektionsergebnisse der Erfassungseinrichtung können miteinander verknüpft und gemeinsam ausgewertet werden, wodurch sich genauere Informationen über den tatsächlichen Prozessablauf und auch eine Plausibilitätskontrolle erzielen lassen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen Industrieroboter mit einem Stopfenfügewerkzeug und ein Werkstück mit einer Fügestelle,
- Figur 2 und 3:: verschiedene perspektivische Ansichten des Stopfenfügewerkzeugs von Figur 1,
- Figur 4 und 5:: zwei Seitenansichten des Stopfenfügewerkzeugs von Figur 1 mit einer verkleideten und unverkleideten Ausgleichseinrichtung und
- Figur 6:: eine Stirnansicht des Stopfenfügewerkzeugs von Figur 1 bis 5.

Die Erfindung betrifft ein Stopfenfügewerkzeug (6) und ein Stopfenfügeverfahren. Die Erfindung betrifft ferner eine Stopfenfügeeinrichtung mit einem Industrieroboter (2) und einem Stopfenfügewerkzeug (6) sowie ein zugehöriges Verfahren.

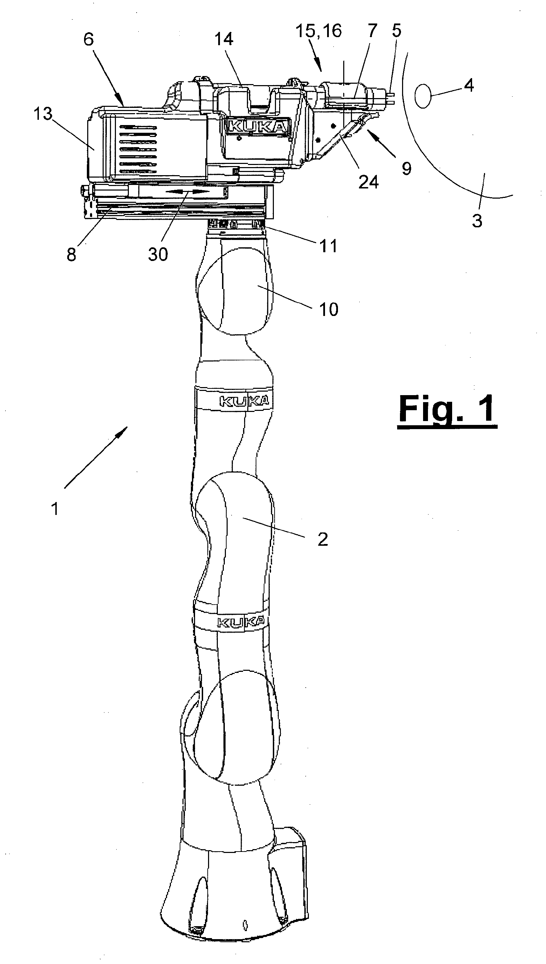

Das robotergeführte Stopfenfügewerkzeug (6) dient zum automatischen Fügen oder sogenannten Setzen von Stopfen (5) an Fügestellen (4) an Werkstücken (3), insbesondere Karosserieteilen, wie sie in Figur 1 schematisch angedeutet sind. Der Stopfen (5) wird dabei z.B. in eine Fügeöffnung (4) am Werkstück (3) eingesetzt und unter Bildung einer Klemm- oder Rastverbindung eingedrückt. Der Stopfen (5) kann z.B. als massivwandiger Öffnungsverschluss ausgebildet sein. Alternativ kann er hohl sein und z.B. eine Kabeldurchführung bilden. In weiterer Abwandlung kann die Fügestelle (4) als Vorsprung oder in anderer Weise ausgebildet sein, wobei ein Stopfen (5) auf einen solchen Vorsprung aufgesetzt wird.

Die Raumlage der Fügestelle (4) ist in manchen Fällen bekannt und kann programmgesteuert direkt angefahren werden. Hierbei kann es allerdings Positionierprobleme wegen Toleranzen, Programmierungenauigkeiten oder dgl. geben. In der gezeigten und bevorzugten Ausführungsform wird die Fügestelle (4) mit einer Erfassungseinrichtung (9) gesucht.

Die Stopfenfügeeinrichtung (1) weist einen mehrachsigen, programmierbaren Industrieroboter (2) und ein vom Roboter geführtes Stopfenfügewerkzeug (6) auf. Statt des bevorzugten Industrieroboters (2) kann eine beliebige andere mehrachsige Handhabungseinrichtung eingesetzt werden. Figur 1 zeigt beispielhaft die Ausgestaltung mit einem Industrieroboter (2).

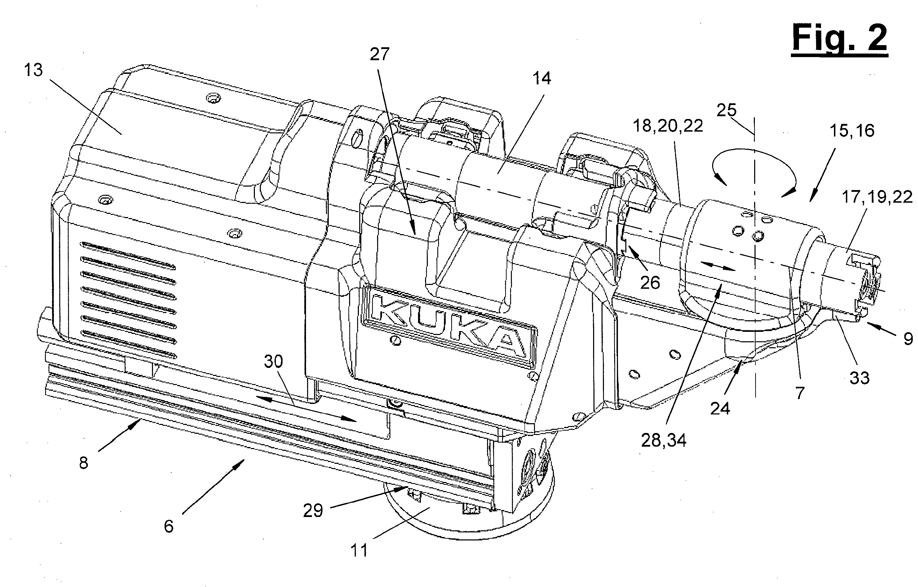

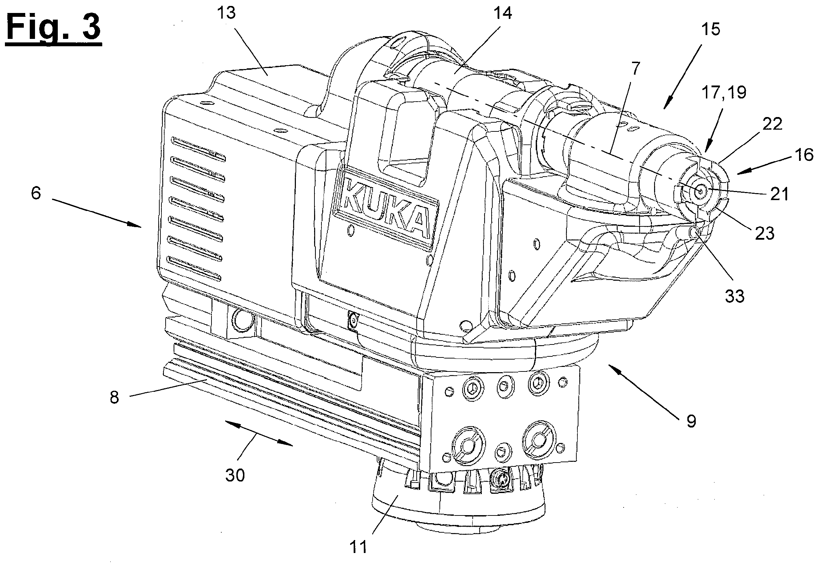

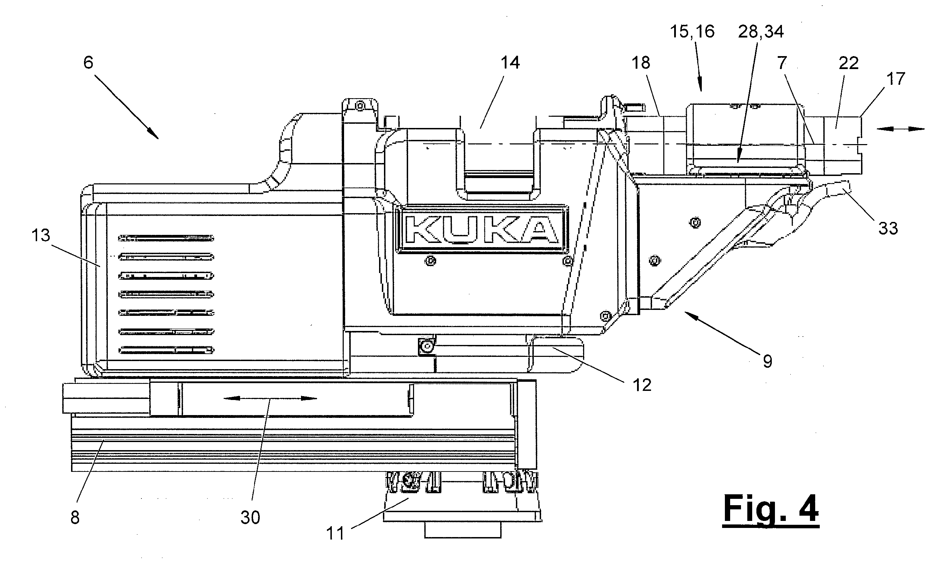

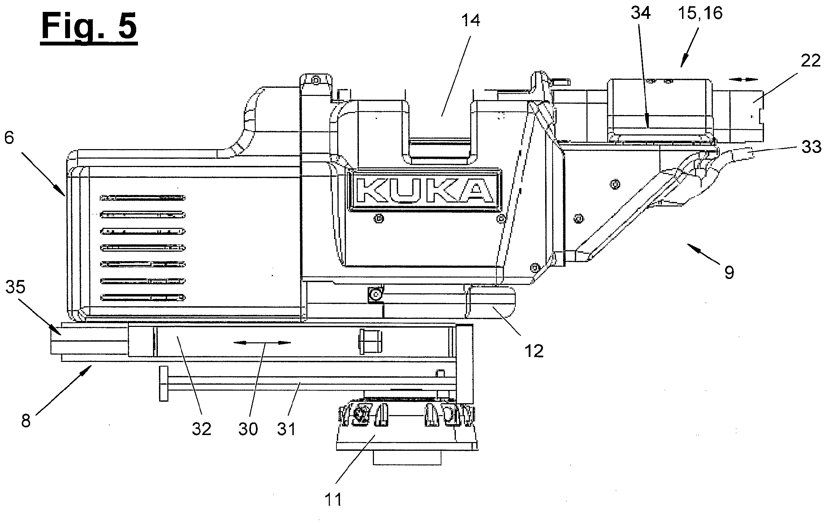

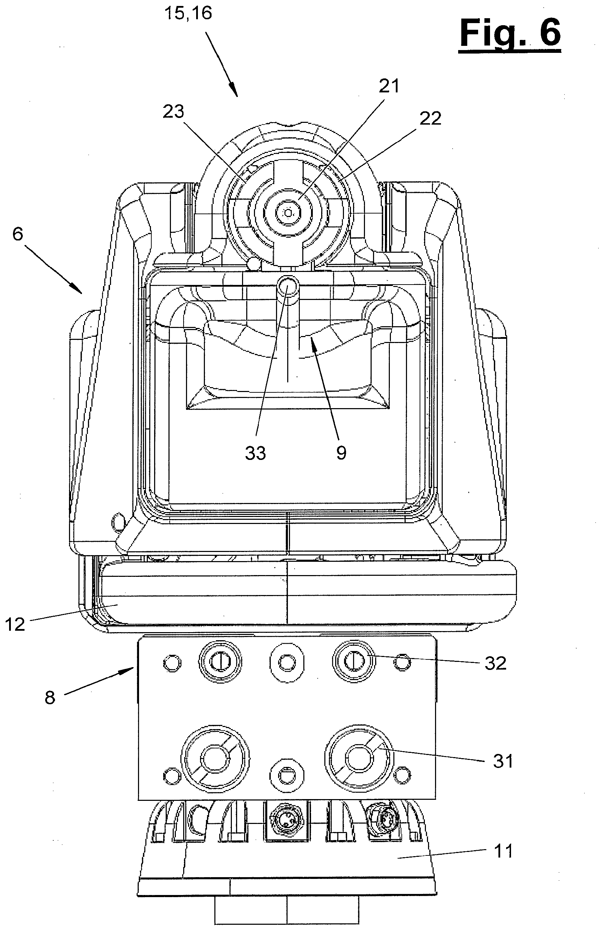

In Figur 2 bis 6 ist das Stopfenfügewerkzeug (6) näher dargestellt. Es weist ein Gestell (12) mit einen Anschluss (29) für den Industrieroboter (2), ein Stopfenmagazin (14) und eine Setzeinheit (15) zum Fügen eines Stopfens (5) an der Fügestelle (4) auf. Die Setzeinheit (15) weist eine Stopfenaufnahme (16) für einen vereinzelten Stopfen (5) und einen Setzstößel (21) auf. Mit dem Setzstößel (21) wird der Stopfen (5) beim Fügevorgang bewegt und mit einer Fügekraft beaufschlagt.

Im gezeigten und bevorzugten Ausführungsbeispiel ist das Stopfenfügewerkzeug (6) fügetechnisch passiv ausgebildet. Die Vorschub- und Fügebewegung sowie die Fügekraft werden dabei durch den Industrieroboter (2) und dessen Bewegung aufgebracht. In einer anderen Ausführungsform kann das Stopfenfügewerkzeug (6) fügetechnisch aktiv ausgebildet sein und ein werkzeugeigenes Antriebsmittel, z.B. einen Zylinder, für die Bewegung und die Kraftbeaufschlagung des Setzstößels (21) aufweisen.

Die Stopfenaufnahme (16) kann einen einzelnen Stopfen (5) in beliebig geeigneter Weise aufnehmen, halten und führen. Dies kann z.B. wie im gezeigten Ausführungsbeispiel durch Formschluss geschehen. Alternativ ist dies durch Kraftschluss, insbesondere Klemmschluss, durch Saugkraft oder auf andere Weise möglich. Die Stopfenaufnahme (16) positioniert dabei auch den Stopfen (5) in fügegerechter Lage gegenüber dem Setzstößel (21).

Die Stopfenaufnahme (16) weist einen oder mehrere Aufnahmeköpfe (17,18) auf. Diese sind jeweils mit einem Setzstößel (21) und einem umgebenden Stopfenköcher (22) zur jeweiligen Aufnahme eines einzelnen Stopfens (5) ausgerüstet.

Der z.B. hülsenförmige Stopfenköcher (22) ist auf dem Setzstößel (21) relativ beweglich gelagert und geführt. Der Stopfenköcher (22) kann entlang der Stößellängsachse gegen die Kraft eines in den Zeichnungen nicht sichtbaren und durch einen Pfeil angedeuteten Rückstellelements (28), z.B. einer Feder, ausweichen. Der Aufnahmekopf (17,18) weist ferner eine Geradführung für den Stopfenköcher (22) auf, die dessen Verdrehen um die Stößellängsachse verhindert.

Der Stopfenköcher (22) weist am vorderen Ende einen Stopfenhalter (23) auf, der z.B. als ringförmige oder bogenabschnittsförmige Aufnahmenut für die formschlüssige Aufnahme des Rands eines Stopfens (5) ausgebildet ist. In einer anderen Ausführungsform kann der Stopfenhalter (23) den Stopfen (5) auf andere Weise z.B. kraftschlüssig oder durch Saugen halten.

Das Stopfenfügewerkzeug (6) weist eine Fügeachse (7) bzw. eine Fügerichtung auf, die mit der Stößellängsachse und der Längsachse des aufgenommenen Stopfens (5) fluchtet. Entlang der Fügeachse (7) wird das Stopfenfügewerkzeug (6) vom Industrieroboter (2) zum Fügen bewegt. In dieser Fügerichtung (7) wird auch der Stopfen (5) in oder auf die Fügestelle (4) eingefügt oder aufgesetzt.

Aus der in Figur 1 gezeigten Ausgangsposition mit Distanz zum Werkstück (3) und zur Fügestelle (4) wird mit dem Stopfen (5) ein bevorzugt gerader Fügeweg ausgeführt, der sich aus einer Folge mehrere Wegstrecken zusammensetzt. Der Fügeweg erstreckt sich vorzugsweise entlang der Fügeachse (7). Die erste Wegstrecke ist der Zustellweg aus der in Figur 1 gezeigten Ausgangsstellung bis zum Fügestart, insbesondere bis zum ersten Kontakt von Stopfen (5) und Fügestelle (4). Die zweite Wegstrecke ist der zum Fügen des Stopfens (5) erforderliche Setzweg, mit dem der Stopfen (5) mit seinem Fußteil bis zur Fügeendstellung in eine Fügeöffnung (4) eingedrückt oder auf einen Fügevorsprung (4) aufgedrückt wird. Ein dritter Wegbestandteil kann ein Toleranzweg sein.

Der gesamte mehrteilige Fügeweg wird im gezeigten Ausführungsbeispiel durch eine Vorschubbewegung des Industrieroboters (2) mit dem Stopfenfügewerkzeug (6) in Fügerichtung (7) ausgeführt. In einer anderen Ausführungsform kann der Fügeweg auf eine Bewegung des Industrieroboters (2) und des werkzeugeigenen Antriebsmittels aufgeteilt werden, wobei z.B. der Industrieroboter (2) den Zustellweg und das Antriebsmittel mit dem Setzstößel (21) dann den Setzweg und den Toleranzweg ausführt.

Das Auftreten und die Größe von Toleranzen sind variabel. Der zum automatischen Stopfenfügen vorgegebene Soll-Fügeweg enthält daher einen vorgegebenen Toleranzweg, der ausreichend groß ist, um alle etwaigen Toleranzen aufnehmen zu können und ein sicheres Fügen zu gewährleisten. Der im Einzelfall auftretende Ist-Fügeweg kann kürzer als der Soll-Fügeweg sein.

Das Stopfenfügewerkzeug (6) weist eine Ausgleichseinrichtung (8) auf. Diese ist dazu vorgesehen und ausgebildet und hat auch die Funktion, Abweichungen des Ist-Fügewegs vom Soll-Fügeweg zu kompensieren. Die Ausgleichseinrichtung (8) kann die Ausbildung und Funktion haben, eine Ausweichbewegung des Setzstößels (21) beim Fügen zu ermöglichen. Insbesondere kann die Ausgleichseinrichtung (8) eine Ausweichbewegung des Setzstößel (21) gegen die Fügerichtung (7) erlauben.

Die Ausgleichseinrichtung (8) kann ferner dafür vorgesehen und ausgebildet sein, eine Ausweichbewegung des Setzstößels (21) nach Überschreiten einer vorgegebenen Reaktionskraft-Schwelle zu ermöglichen. Dies gewährleistet, dass für den Fügeprozess die erforderliche Fügekraft vorhanden ist und die besagte Schwelle erst nach erfolgtem Setzen des Stopfens oder bei Auftreten von Fehlern oder Störungen erreicht und überschritten wird. Die Fügekraft genügt, um die bei der Setzbewegung auftretenden Reibungs- oder Rastwiderstände zu überwinden.

Bei Erreichen der Setzstellung fährt der Stopfen (5) auf Anschlag, sodass bei einer z.B. wegen des Toleranzwegs fortgesetzten Fügebewegung die Reaktionskraft über den besagten Schwellwert ansteigt. Die Reaktionskraft steigt außerdem bis über die Schwelle an, wenn der Stopfen (5) bei der Fügewegung die Fügestelle (4) verfehlt und z.B. gegen den Öffnungsrand gedrückt wird.

Die Ausgleichseinrichtung (8) weist eine Ausgleichsachse (30) auf, die vorzugsweise linear ausgebildet ist. Sie ist insbesondere parallel zur Längsachse des Setzstößels (21) bzw. zur Fügeachse (7) oder Fügerichtung ausgerichtet. Alternativ kann die Ausweichachse (30) eine andere, z.B. schräge Ausrichtung oder auch eine andere, z.B. rotatorische Kinematik haben.

Die Ausgleichseinrichtung (8) kann konstruktiv in unterschiedlicher Weise ausgebildet sein. In der gezeigten Ausführungsform mit der linearen Ausgleichsachse (30) weist sie eine lineare Führung (31) auf. Die Ausgleichseinrichtung (8) ist in der gezeigten Ausführungsvariante als Schlittenanordnung ausgebildet.

Die Ausgleichseinrichtung (8) weist ferner einen entlang der Ausgleichsachse (30) wirkenden Gegenhalter (32) auf. Dieser wirkt mit dem beweglichen Element der Ausgleichseinrichtung (8), z.B. einem Schlitten, zusammen.

Der Gegenhalter (32) weist eine bevorzugt einstellbare Gegenkraft oder Vorspannung auf und gibt erst nach deren Überschreiten eine Ausweichbewegung frei. Die einstellbare Gegenkraft oder Vorspannung kann die vorgenannte Reaktionskraft-Schwelle bilden. In der gezeigten Ausführungsform ist der Gegenhalter (32) als fluidischer, insbesondere pneumatischer Zylinder ausgebildet. Wenn die Reaktionskraft die eingestellte Druckkraft des Zylinders überschreitet, gibt der Zylinder entlang der Ausgleichsachse (30) nach und weicht zurück. Der Gegenhalter (32) kann vorzugsweise elastisch ausweichen und dann wieder selbsttätig in die Ausgangsstellung zurückkehren.

Die Ausgleichseinrichtung (8) kann für die eingangs genannten Funktionen an einer beliebig geeigneten Stelle des Stopfenfügewerkzeugs (6) angeordnet sein. Im gezeigten Ausführungsbeispiel ist sie am Roboteranschluss (29) angeordnet. Durch diese Anordnung kann der Setzstößel (21) beim Fügevorgang relativ zum Industrieroboter (2) ausweichen bzw. kann eine Differenz zwischen Ist- und Soll-Fügeweg kompensiert werden.

Bei der gezeigten fügetechnisch passiven Werkzeugausbildung ist die Führung (31) z.B. mit dem Roboteranschluss (29) versehen und der Schlitten mit dem Gestell (12) verbunden. In einer anderen Ausführungsform kann die Ausgleichseinrichtung (8) integriert im Gestell (12) angeordnet sein, z.B. an der Lagerung oder Abstützung des Setzstößels (21).

Bei einer fügetechnisch aktiven Ausgestaltung des Stopfenfügewerkzeugs (6) kann die Ausgleichseinrichtung (8) z.B. an der gestellseitigen Abstützung oder Lagerung des werkzeugeigenen Antriebsmittels für den Setzstößel (21) angeordnet sein. Alternativ ist auch in diesem Fall die gezeigte Anordnung der Ausgleichseinrichtung am Roboteranschluss (29) möglich.

Die Setzeinheit (15) weist in der gezeigten Ausführungsform mehrere Stopfenaufnahmen (16) und Setzstößel (21) sowie eine Dreheinrichtung (24) für die angesteuerte Drehbewegung um eine Drehachse (25) auf. Figur 2 verdeutlicht dies Anordnung. In diesem Fall sind zwei Stopfenaufnahmen (16) bzw. Aufnahmeköpfe (17,18) der genannten Art vorhanden, die bzgl. der Drehachse (25) einander diametral gegenüberliegen. Die Drehachse (25) ist quer zur Längsachse des bevorzugt stangenförmigen oder zylindrischen Stopfenmagazin (14) und zur Stößellängsachse bzw. zur Fügeachse (7) ausgerichtet. Die besagen Achsen (7,25) können sich schneiden. Die Setzstößel (21) sind an einem gemeinsamen Träger oder Zapfen der Dreheinrichtung (24) in ihrer Axialrichtung abgestützt. In Abwandlung der gezeigten Ausführungsform kann die Setzeinheit (15) nur einen oder drei oder mehr z.B. sternförmig angeordnete und mit der Dreheinrichtung (24) verbundende Setzstößel (21) und Stopfenaufnahmen (16) bzw. Aufnahmeköpfe (17,18) aufweisen.

In der gezeigten Ausführungsform nimmt ein Setzstößel (21) bzw. Aufnahmekopf (17) eine zur Werkzeugfront bzw. zur Fügestelle (4) weisende Fügestellung (19) ein, wobei der zweite oder ein anderer Setzstößel (21) bzw. Aufnahmekopf (18) eine zum Stopfenmagazin (14) weisende Ladestellung (20) einnimmt. In dieser Drehstellung oder Ladestellung (20) kann der zugehörige Stopfenköcher (22) mit einem einzelnen Stopfen (5) aus dem Magazin (14) beladen werden. Hierfür weist das Stopfenmagazin (14) eine steuerbare Ladeeinrichtung (27) für den Vorschub der magazinseitig aufgenommenen Stopfenreihe und der Übergabe eines einzelnen Stopfens (5) an den Stopfenköcher (22) auf.

Für die Drehbewegung der Setzeinheit (15) um die Drehachse (25) kann ein geringfügiger Abstand zwischen dem Stopfenmagazin (14) und dem in Ladestellung (20) befindlichen Aufnahmekopf (18) vorhanden sein. Dieser Abstand kann durch eine Relativbewegung zwischen Stopfenköcher (22) und Stopfenmagazin (14) minimiert werden. Hierbei kann außerdem eine Dreharretierung (26) formschlüssig geschlossen werden, die beim Ladevorgang ein Verdrehen der Setzeinheit (15) um die Drehachse (25) und auch ein Verdrehen des Stopfenköchers (22) um die Fügeachse (7) verhindert. Für die besagte Relativbewegung kann eine Vorschubeinrichtung mit einem steuerbaren Antrieb vorhanden sein. Ferner kann eine Steuer- und Begrenzungseinrichtung (nicht dargestellt) vorhanden sein, welche auf die in Füge- und Ladestellung (19,20) befindlichen Stopfenköcher (22) einwirkt. Sie kann einerseits den gerade beladenen Stopfenköcher (22) gegen die Ladekraft arretieren und abstützen. Andererseits kann sie den Stopfenköcher (22) in Fügestellung (19) ein klein wenig gegenüber dem Setzstößel (21) zurückziehen und dadurch den aufgenommenen Stopfen (5) vorspannen.

Die eingangs erwähnte Erfassungseinrichtung (9) kann einteilig oder mehrteilig sein und einem oder mehreren Zwecken dienen. Sie weist hierfür eine oder mehrere sensorische und ggf. messtechnische Komponenten auf, die unterschiedlich ausgebildet und verteilt am Stopfenfügewerkzeug (6) angeordnet sein können. Die Zahl, Anordnung und Ausbildung der Komponenten der Erfassungseinrichtung (9) ist wählbar und kann variieren. Vorzugsweise dient die Erfassungseinrichtung (9) zur Detektion der Fügestelle (4) und/oder zur Detektion einer Prozessreaktion bzw. eines Prozessparameters und ist hierfür entsprechend ausgebildet.

Die Erfassungseinrichtung (9) ist in der gezeigten Ausführungsform dreiteilig und hat drei verschiedene Erfassungs- bzw. Detektionsfunktionen. Sie weist einen optischen Sensor (33), insbesondere eine digitale Messkamera, für die Detektion der Fügestelle (4) auf. Die Erfassungseinrichtung (9) kann ferner einen Sensor (34), insbesondere einen Wegmesser, für die Detektion des Ausweichwegs des Stopfenköchers (22), insbesondere beim Fügen, aufweisen. Die Erfassungseinrichtung (9) kann außerdem einen der Ausgleichseinrichtung (8) zugeordneten Sensor (35), insbesondere einen Kraftmesser, für die Detektion der Prozessreaktion, insbesondere der Reaktionskraft, beim Fügen aufweisen.

Der optische Sensor (33) ist z.B. als 2D-Kamera ausgebildet und ist an der Front des Stopfenfügewerkzeugs (6) angeordnet. Der Sensor (33) ist unterhalb des in Fügestellung (19) befindlichen Aufnahmekopfs (17) bzw. Setzstößels (21) angeordnet und blickt in Fügerichtung (7) nach vorn auf das Werkstück (3). Der Sensor (33) erfasst und vermisst optisch die Fügestelle (4). Aus dem Messergebnis kann zumindest die Relativlage bzw. eine Lageabweichung in der Hoch- und Querachse zwischen der Fügestelle (4) und dem in Fügestellung (10) befindlichen Stopfen (5) und Setzstößel (21) ermittelt werden. Der Industrieroboter (2) bewegt das Stopfenfügewerkzeug (6) auf eine programmierte Ausgangsposition gegenüber der Fügestelle (4). Bei Detektion einer Lageabweichung wird die Werkzeugposition nachgeführt.

Der optische Sensor (33) kann in der Ausbildung als 2D-Kamera u.U. den tatsächlichen Abstand zwischen Stopfen (5) bzw. Setzstößel (21) und Fügestelle (4) nicht detektieren. Etwaige Abweichungen vom programmierten Abstand gehen dann in den vorerwähnten Toleranzweg ein. In einer anderen und nicht gezeigten Ausführungsform kann der optische Sensor (33) mehrfach vorhanden und als 3D-Kamera ausgebildet sein, mit der auch der besagte Abstand in Fügerichtung (7) detektiert und bei etwaigen Lageabweichungen nachgesteuert werden kann.

Der Sensor (34) detektiert den Ausweichweg des Stopfenköchers (22) beim Fügen und kann hierfür an beliebig geeigneter Stelle angeordnet sein und entsprechend ausgebildet sein. Er kann sich z.B. am Setzstößel (21) oder an der Dreheinrichtung (24) oder am Gestell (12) oder an anderer geeigneter Stelle befinden. Er kann den Ausweichweg des Stopfenköchers (22) als Position, als Weg, als Abstand gegenüber einem externen Punkt oder in beliebig anderer Weise detektieren.

Beim Fügen des Stopfens (5), insbesondere beim Setzen eines Stopfens (5) in eine Fügeöffnung (4), schlägt der Stopfenköcher (22) am Werkstück (3) an, wobei der Setzstößel (21) die Fügebewegung in Richtung (7) noch ein Stück fortsetzt und den Stopfen (5) dabei mitnimmt sowie aus dem Stopfenköcher (22) löst. Diese Relativbewegung oder Ausweichbewegung des Stopfenköchers (22) wird mit dem Sensor (34) detektiert. Hierüber kann der korrekte Prozessablauf, insbesondere das Austreiben des Stopfens (5) aus dem Stopfenköcher (22) detektiert werden. Wenn keine solche Relativ- oder Ausweichbewegung stattfindet oder eine von einer Vorgabe abweichende Richtung und/oder Größe hat, ist dies ein Indiz für einen Prozessfehler und ggf. auch für eine bestimmte Fehlerursache.

Der Sensor (35) an der Ausgleichseinrichtung (8) kann z.B. die beim Fügen auftretende Reaktionskraft und/oder auch den Ausweichweg messen. Hierbei lässt sich ebenfalls durch Vergleich mit einer Vorgabe ein Prozessfehler und ggf. dessen Ursache ermitteln.

Die Messergebnisse der Sensoren (33,34,35) können außerdem miteinander verknüpft werden, um eine komplexere Prozessüberwachung und etwaige Fehlerermittlung durchführen zu können. Die Erfassungseinrichtung (9) kann mit einer Steuerung des Stopfensetzwerkzeugs (6) verbunden sein. Dies kann eine integrierte oder externe Steuerung, z.B. eine Robotersteuerung (nicht dargestellt) sein.

Der Industrieroboter (2) ist mehrgliedrig ausgebildet und besitzt mehrere steuerbare und regelbare Roboterachsen. Er kann dabei eine beliebige Zahl und Kombination von rotatorischen und/oder translatorischen Roboterachsen haben. Der in Figur 1 gezeigte Industrieroboter (2) hat sieben Roboterachsen und vier Roboterglieder einschließlich einer Basis, zwei Zwischengliedern und einem Endglied oder Abtriebsglied (10), welches ein bewegliches, insbesondere rotierendes Abtriebselement (11) in Form eines Flansches oder dgl. aufweist. Am Abtriebselement (11) ist im gezeigten Ausführungsbeispiel die Ausgleichseinrichtung (8) angeschlossen. Diese Anschlussstelle bildet auch den Roboteranschluss (29).

Die Zwischenglieder des Industrieroboters (2) können eine abgewinkelte Form haben und mittels einer integrierten Roboterachse in sich um ihre Längserstreckung verdrehbar sein. Statt der gezeigten Anordnung sind beliebige andere Roboterkonfigurationen möglich. Der Industrieroboter (2) kann stationär oder instationär angeordnet sein. Bei einer instationären Anordnung kann der Industrieroboter (2) eine Fahrachse aufweisen oder auf einem ggf. mehrachsig im Raum beweglichen Fahrzeug angeordnet sein.

Der Industrieroboter (2) kann positionsgesteuerte Roboterachsen aufweisen. In diesem Fall wird der Fügeprozess über den Fügeweg gesteuert, wobei die Ausgleichseinrichtung (8) die vorgenante Kompensationsfunktion hat bzw. ein Ausweichen des Setzstößels (21) ermöglicht.

Alternativ kann der Industrieroboter (2) taktile Eigenschaften haben und eine entsprechende Sensorik aufweisen, die von außen einwirkende Belastungen, insbesondere Kräfte und/oder Momente erfasst und auswertet. Die Sensorik kann zwischen dem Abtriebselement (11) und dem Stopfenfügewerkzeug (6) angeordnet sein. Sie kann alternativ in den Industrieroboter (2) integriert sein, wobei sich z.B. Momentensensoren an den rotatorischen Roboterachsen und deren Lagerungen befinden. Außerdem können hier Weggeber, insbesondere Drehgeber angeordnet sein. Die Sensorik kann mit der Erfassungseinrichtung (9) des Stopfenfügewerkzeugs (6) gekoppelt werden, z.B. über die Robotersteuerung.

Abwandlungen der gezeigten und beschriebenen Ausführungsform sind im Rahmen der Ansprüche in verschiedener Weise möglich. Insbesondere können die Merkmale des vorbeschriebenen Ausführungsbeispiels und der genannten Varianten beliebig miteinander kombiniert, insbesondere auch ausgetauscht werden.

### BEZUGSZEICHENLISTE

- 1: Stopfenfügeeinrichtung
- 2: Industrieroboter
- 3: Werkstück, Karosserie
- 4: Fügestelle, Fügeöffnung, Fügevorsprung
- 5: Stopfen
- 6: Stopfenfügewerkzeug
- 7: Fügeachse, Fügerichtung
- 8: Ausgleichseinrichtung
- 9: Erfassungseinrichtung
- 10: Abtriebsglied, Roboterhand
- 11: Abtriebselement
- 12: Gestell
- 13: Gehäuse, Schutzhülle
- 14: Stopfenmagazin
- 15: Setzeinheit
- 16: Stopfenaufnahme
- 17: Aufnahmekopf
- 18: Aufnahmekopf
- 19: Fügestellung
- 20: Ladestellung
- 21: Setzstößel
- 22: Stopfenköcher
- 23: Stopfenhalter, Aufnahmenut
- 24: Dreheinrichtung
- 25: Drehachse von Dreheinrichtung
- 26: Dreharretierung
- 27: Ladeeinrichtung
- 28: Rückstellelement, Feder
- 29: Anschluss, Roboteranschluss
- 30: Ausgleichsachse
- 31: Führung
- 32: Gegenhalter, Zylinder
- 33: optischer Sensor, Kamera
- 34: Sensor, Wegmesser
- 35: Sensor, Kraftmesser

## Patentansprüche

1. Robotergeführtes Werkzeug (6) zum automatischen Fügen von Stopfen (5) an Werkstücken (3), insbesondere Karosserieteilen, wobei das Stopfenfügewerkzeug (6) ein Gestell (12) mit einem Anschluss (29) für einen Industrieroboter (2), ein Stopfenmagazin (14) und eine Setzeinheit (15) mit einer Stopfenaufnahme (16) und einem Setzstößel (21) zum Fügen eines Stopfens (5) an einer Fügestelle (4) des Werkstücks (3) aufweist, wobei das Stopfenfügewerkzeug (6) eine Ausgleichseinrichtung (8) zur Kompensation von Abweichungen des Ist-Fügewegs vom Soll-Fügeweg aufweist, **dadurch gekennzeichnet, dass** die Stopfenaufnahme (16) einen oder mehrere Aufnahmeköpfe (17,18) mit jeweils einem Setzstößel (21) und einem Stopfenköcher (22) zur Aufnahme eines einzelnen Stopfens (5) aufweist, wobei der Stopfenköcher (22) relativ zum Setzstößel (21) axial ausweichfähig gelagert ist und wobei der jeweilige Stopfenköcher (22) auf seinem Setzstößel (21) axial verschieblich gelagert und von einem Rückstellelement (28) beaufschlagt ist.

2. Stopfenfügewerkzeug nach Anspruch 1, **dadurch gekennzeichnet, dass** das Stopfenfügewerkzeug (6) eine Ausgleichseinrichtung (8) für eine Ausweichbewegung des Setzstößels (21) beim Fügen, insbesondere für eine Ausweichbewegung des Setzstößels (21) gegen seine Fügerichtung (7), aufweist.

3. Stopfenfügewerkzeug nach Anspruch 1, 2 oder 3, **dadurch gekennzeichnet, dass** die Ausgleichseinrichtung (8) für eine Ausweichbewegung des Setzstößels (21) nach Überschreiten einer vorgegebenen Reaktionskraft-Schwelle vorgesehen und ausgebildet ist.

4. Stopfenfügewerkzeug nach einem der vorhergehenden Ansprüche, **dadurch gekennzeichnet, dass** die Ausgleichseinrichtung (8) einen entlang der Ausgleichsachse (30) wirkenden Gegenhalter (32) aufweist, der eine bevorzugt einstellbare Gegenkraft oder Vorspannung aufweist und erst nach deren Überschreiten eine Ausweichbewegung freigibt.

5. Stopfenfügewerkzeug nach einem der vorhergehenden Ansprüche, **dadurch gekennzeichnet, dass** die Ausgleichseinrichtung (8) integriert im Gestell (12) oder am Anschluss (29) angeordnet ist.

6. Stopfenfügewerkzeug nach einem der vorhergehenden Ansprüche, **dadurch gekennzeichnet, dass** das Stopfenfügewerkzeug (6) fügetechnisch passiv ausgebildet ist, wobei die Fügebewegung und die Fügekraft des Setzstößels (21) vom Industrieroboter (2) aufgebracht werden.

7. Stopfenfügewerkzeug nach einem der vorhergehenden Ansprüche, **dadurch gekennzeichnet, dass** das Stopfenfügewerkzeug (6) eine Erfassungseinrichtung (9) zur Detektion der Fügestelle (4) und/oder einer Prozessreaktion bzw. eines Prozessparameters aufweist.

8. Stopfenfügewerkzeug nach Anspruch 7, **dadurch gekennzeichnet, dass** die Erfassungseinrichtung (9) einen Sensor (34), insbesondere einen Wegmesser, für die Detektion des Ausweichwegs des Stopfenköchers (22), insbesondere beim Fügen, aufweist.

9. Stopfenfügewerkzeug nach Anspruch 7 oder 8, **dadurch gekennzeichnet, dass** die Erfassungseinrichtung (9) einen der Ausgleichseinrichtung (8) zugeordneten Sensor (35), insbesondere einen Kraftmesser, für die Detektion der Prozessreaktion, insbesondere der Reaktionskraft, beim Fügen aufweist.

10. Stopfenfügewerkzeug nach einem der vorhergehenden Ansprüche, **dadurch gekennzeichnet, dass** die Stopfenaufnahme (16) eine Steuer- und Begrenzungseinrichtung für die Axialbewegung des oder der Stopfenköcher (22) in einer Füge- und Ladestellung (19,20) aufweist.

11. Stopfenfügewerkzeug nach einem der vorhergehenden Ansprüche, **dadurch gekennzeichnet, dass** die Stopfenaufnahme (16) eine Dreheinrichtung (20) für einen oder mehrere Aufnahmeköpfe (17,18) relativ zum Stopfenmagazin (14) aufweist und das Stopfenfügewerkzeug (6) eine Ladeeinrichtung (27) für das Stopfenmagazin (14) aufweist.

12. Stopfenfügeeinrichtung zum automatischen Fügen von Stopfen (5) an Werkstücken (3), insbesondere Karosserieteilen, wobei die Stopfenfügeeinrichtung (1) einen mehrachsigen Industrieroboter (2) mit einem Stopfenfügewerkzeug (6) aufweist, **dadurch gekennzeichnet, dass** das Stopfenfügewerkzeug (3) nach mindestens einem der Ansprüche 1 bis 11 ausgebildet ist.

13. Verfahren zum automatischen Fügen von Stopfen (5) an Werkstücken (3), insbesondere Karosserieteilen, mittels eines robotergeführtes Stopfenfügewerkzeugs (6), welches ein Gestell (12) mit einem Anschluss (29) für einen Industrieroboter (2), ein Stopfenmagazin (14) und eine Setzeinheit (15) mit einer Stopfenaufnahme (16) und einem Setzstößel (21) zum Fügen eines Stopfens (5) an einer Fügestelle (4) des Werkstücks (3) aufweist, wobei Abweichungen des Ist-Fügewegs vom Soll-Fügeweg mittels einer Ausgleichseinrichtung (8) des Stopfenfügewerkzeugs (6) kompensiert werden, **dadurch**
**gekennzeichnet, dass** die Stopfenaufnahme (16) einen oder mehrere Aufnahmeköpfe (17,18) mit jeweils einem Setzstößel (21) und einem Stopfenköcher (22) zur Aufnahme eines einzelnen Stopfens (5) aufweist, wobei der Stopfenköcher (22) relativ zum Setzstößel (21) axial ausweichfähig gelagert ist und wobei der jeweilige Stopfenköcher (22) auf seinem Setzstößel (21) axial verschieblich gelagert ist und von einem Rückstellelement (28) beaufschlagt wird.

14. Verfahren nach Anspruch 13, **dadurch**
**gekennzeichnet, dass** die Ausgleichseinrichtung (8) eine Kraftmessung durchführt und den Setzstößel (21) nach Überschreiten einer vorgegebenen Reaktionskraft-Schwelle zurückweichen lässt.

15. Verfahren nach Anspruch 13 oder 14, **dadurch**
**gekennzeichnet, dass** die Ausgleichseinrichtung (8) bei einem fügetechnisch passiven Stopfenfügewerkzeug (6) eingesetzt wird, bei dem die Vorschub- oder Fügebewegung und die Fügekraft von einem Industrieroboter (2) aufgebracht werden.

## Claims

1. Robot-guided tool (6) for automatically joining plugs (5) to workpieces (3), in particular vehicle body parts, wherein the plug joining tool (6) has a frame (12) having a port (29) for an industrial robot (2), a plug magazine (14) and a setting unit (15) having a plug receptacle (16) and a setting ram (21) for joining a plug (5) at a joining point (4) on the workpiece (3), wherein the plug joining tool (6) has a compensation device (8) for compensating for deviations of the actual joining path from the target joining path, **characterized in that** the plug receptacle (16) has one or more receiving heads (17, 18) each having a setting ram (21) and a plug quiver (22) for receiving an individual plug (5), wherein the plug quiver (22) is mounted so as to be able to yield axially relative to the setting ram (21) and wherein the respective plug quiver (22) is mounted so as to be axially displaceable on its setting ram (21) and is acted upon by a restoring element (28).

2. Plug joining tool according to Claim 1, **characterized in that** the plug joining tool (6) has a compensation device (8) for a yielding movement of the setting ram (21) during joining, in particular for a yielding movement of the setting ram (21) counter to its joining direction (7).

3. Plug joining tool according to Claim 1, 2 or 3, **characterized in that** the compensation device (8) is intended and designed for a yielding movement of the setting ram (21) once a predetermined reaction-force threshold has been exceeded.

4. Plug joining tool according to one of the preceding claims, **characterized in that** the compensation device (8) has a counter holder (32), which acts along the compensation axis (30), has a preferably adjustable counter force or preload and enables a yielding movement only once said counter force or preload has been exceeded.

5. Plug joining tool according to one of the preceding claims, **characterized in that** the compensation device (8) is integrated in the frame (12) or arranged on the port (29) .

6. Plug joining tool according to one of the preceding claims, **characterized in that** the plug joining tool (6) is designed to be passive in terms of joining, wherein the joining movement and the joining force of the setting ram (21) are applied by the industrial robot (2).

7. Plug joining tool according to one of the preceding claims, **characterized in that** the plug joining tool (6) has a sensing device (9) for detecting the joining point (4) and/or a process reaction or a process parameter.

8. Plug joining tool according to Claim 7, **characterized in that** the sensing device (9) has a sensor (34), in particular a position measuring device, for detecting the yield path of the plug quiver (22), in particular during joining.

9. Plug joining tool according to Claim 7 or 8, **characterized in that** the sensing device (9) has a sensor (35), in particular a force measuring device, which is assigned to the compensation device (8) and is intended to detect the process reaction, in particular the reaction force, during joining.

10. Plug joining tool according to one of the preceding claims, **characterized in that** the plug receptacle (16) has a control and limiting device for the axial movement of the one or more plug quivers (22) in a joining and loading position (19, 20).

11. Plug joining tool according to one of the preceding claims, **characterized in that** the plug receptacle (16) has a rotary device (20) for one or more receiving heads (17, 18) relative to the plug magazine (14), and the plug joining tool (6) has a loading device (27) for the plug magazine (14).

12. Plug joining device for automatically joining plugs (5) to workpieces (3), in particular vehicle body parts, wherein the plug joining device (1) has a multi-axial industrial robot (2) having a plug joining tool (6), **characterized in that** the plug joining tool (3) is designed according to at least one of Claims 1 to 11.

13. Method for automatically joining plugs (5) to workpieces (3), in particular vehicle body parts, by means of a robot-guided plug joining tool (6), which has a frame (12) having a port (29) for an industrial robot (2), a plug magazine (14) and a setting unit (15) having a plug receptacle (16) and a setting ram (21) for joining a plug (5) at a joining point (4) on the workpiece (3), wherein deviations of the actual joining path from the target joining path are compensated for by means of a compensation device (8) of the plug joining tool (6), **characterized in that** the plug receptacle (16) has one or more receiving heads (17, 18) each having a setting ram (21) and a plug quiver (22) for receiving an individual plug (5), wherein the plug quiver (22) is mounted so as to be able to yield axially relative to the setting ram (21) and wherein the respective plug quiver (22) is mounted so as to be axially displaceable on its setting ram (21) and is acted upon by a restoring element (28) .

14. Method according to Claim 13, **characterized in that** the compensation device (8) performs a force measurement and allows the setting ram (21) to retreat once a predetermined reaction-force threshold has been exceeded.

15. Method according to Claim 13 or 14, **characterized in that** the compensation device (8) is used in the case of a plug joining tool (6) that is passive in terms of joining, in the case of which the advancing or joining movement and the joining force are applied by an industrial robot (2).

## Revendications

1. Outil robotisé (6) pour un assemblage automatique de bouchons (5) sur des pièces à travailler (3), en particulier des pièces de carrosserie, dans lequel l'outil d'assemblage de bouchons (6) présente un bâti (12) pourvu d'un raccord (29) pour un robot industriel (2), un magasin à bouchons (14) et une unité de pose (15) pourvu d'un logement de bouchon (16) et d'un poussoir de pose (21) pour assembler un bouchon (5) à un emplacement d'assemblage (4) de la pièce à travailler (3), dans lequel l'outil d'assemblage de bouchons (6) présente un dispositif de compensation (8) pour compenser des écarts entre la course d'assemblage réelle et la course d'assemblage de consigne,
**caractérisé en ce que** le logement de bouchon (16) présente une ou plusieurs têtes de réception (17, 18) avec respectivement un poussoir de pose (21) et un fourreau à bouchon (22) pour recevoir un seul bouchon (5), dans lequel le fourreau à bouchon (22) est monté de manière à pouvoir se déporter axialement par rapport au poussoir de pose (21), et dans lequel le fourreau à bouchon (22) respectif est monté de manière axialement mobile sur son poussoir de pose (21) et est sollicité par un élément de rappel (28).

2. Outil d'assemblage de bouchons selon la revendication 1, **caractérisé en ce que** l'outil d'assemblage de bouchons (6) présente un dispositif de compensation (8) pour un mouvement de déport du poussoir de pose (21) lors de l'assemblage, en particulier pour un mouvement de déport du poussoir de pose (21) à l'opposé de sa direction d'assemblage (7).

3. Outil d'assemblage de bouchons selon la revendication 1, 2 ou 3, **caractérisé en ce que** le dispositif de compensation (8) est prévu et réalisé pour un mouvement de déport du poussoir de pose (21) après le dépassement d'un seuil de force de réaction prédéfini.

4. Outil d'assemblage de bouchons selon l'une quelconque des revendications précédentes, **caractérisé en ce que** le dispositif de compensation (8) présente une contre-butée (32) agissant le long de l'axe de compensation (30) et qui présente une force antagoniste ou précontrainte, de préférence réglable, et ne libère un mouvement de déport qu'une fois celle-ci dépassée.

5. Outil d'assemblage de bouchons selon l'une quelconque des revendications précédentes, **caractérisé en ce que** le dispositif de compensation (8) est intégré dans le bâti (12) ou est disposé au niveau du raccord (29) .

6. Outil d'assemblage de bouchons selon l'une quelconque des revendications précédentes, **caractérisé en ce que** l'outil d'assemblage de bouchons (6) est réalisé de manière passive en technique d'assemblage, dans lequel le mouvement d'assemblage et la force d'assemblage du poussoir de pose (21) sont fournis par le robot industriel (2).

7. Outil d'assemblage de bouchons selon l'une quelconque des revendications précédentes, **caractérisé en ce que** l'outil d'assemblage de bouchons (6) présente un dispositif de détection (9) pour détecter le point d'assemblage (4) et/ou une réaction de processus ou un paramètre de processus.

8. Outil d'assemblage de bouchons selon la revendication 7, **caractérisé en ce que** le dispositif de détection (9) présente un capteur (34), en particulier un capteur de déplacement, pour la détection de la course de déport du fourreau à bouchon (22), en particulier lors de l'assemblage.

9. Outil d'assemblage de bouchons selon la revendication 7 ou 8, **caractérisé en ce que** le dispositif de détection (9) présente un capteur (35) associé au dispositif de compensation (8), en particulier un dynamomètre, pour la détection de la réaction de processus, en particulier de la force de réaction, lors de l'assemblage.

10. Outil d'assemblage de bouchons selon l'une quelconque des revendications précédentes, **caractérisé en ce que** le logement de bouchon (16) présente un dispositif de commande et de délimitation pour le mouvement axial du ou des fourreaux à bouchons (22) dans une position d'assemblage et de chargement (19, 20) .

11. Outil d'assemblage de bouchons selon l'une quelconque des revendications précédentes, **caractérisé en ce que** le logement de bouchon (16) présente un dispositif rotatif (20) pour une ou plusieurs têtes de réception (17, 18) par rapport au magasin à bouchons (14), et l'outil d'assemblage de bouchons (6) présente un dispositif de chargement (27) pour le magasin à bouchons (14).

12. Dispositif d'assemblage de bouchons pour l'assemblage automatique de bouchons (5) sur des pièces à travailler (3), en particulier des pièces de carrosserie, dans lequel le dispositif d'assemblage de bouchons (1) présente un robot industriel (2) multiaxial pourvu d'un outil d'assemblage de bouchons (6), **caractérisé en ce que** l'outil d'assemblage de bouchons (3) est réalisé selon l'une quelconque des revendications 1 à 11.

13. Procédé permettant d'assembler automatiquement des bouchons (5) sur des pièces à travailler (3), en particulier des pièces de carrosserie, au moyen d'un outil d'assemblage de bouchons (6) robotisé qui présente un bâti (12) pourvu d'un raccord (29) pour un robot industriel (2), un magasin à bouchons (14) et une unité de pose (15) pourvue d'un logement de bouchon (16) et d'un poussoir de pose (21) pour assembler un bouchon (5) à un emplacement d'assemblage (4) de la pièce à travailler (3), dans lequel des écarts entre la course d'assemblage réelle et la course d'assemblage de consigne sont compensés au moyen d'un dispositif de compensation (8) de l'outil d'assemblage de bouchons (6),
**caractérisé en ce que** le logement de bouchon (16) présente une ou plusieurs têtes de réception (17, 18) pourvues respectivement d'un poussoir de pose (21) et d'un fourreau à bouchon (22) pour recevoir un seul bouchon (5), dans lequel le fourreau à bouchon (22) est monté de manière à pouvoir se déporter axialement par rapport au poussoir de pose (21), et dans lequel le fourreau à bouchon (22) respectif est monté de manière axialement mobile sur son poussoir de pose (21) et est sollicité par un élément de rappel (28).

14. Procédé selon la revendication 13, **caractérisé en ce que** le dispositif de compensation (8) effectue une mesure de force et laisse reculer le poussoir de pose (21) dès qu'un seuil de force de réaction prédéfini a été dépassé.

15. Procédé selon la revendication 13 ou 14, **caractérisé en ce que** le dispositif de compensation (8) est inséré sur un outil d'assemblage de bouchons (6) passif en technique d'assemblage, dans lequel le mouvement d'avance ou d'assemblage et la force d'assemblage sont fournis par un robot industriel (2).
